# EUROPÄISCHE PATENTSCHRIFT

(11) **EP 2 496 444 B1**
(45) Veröffentlichungstag und Bekanntmachung des Hinweises auf die Patenterteilung: **01.01.2014**
(21) Anmeldenummer: 10779462.0
(22) Anmeldetag: 02.11.2010
(51) Int. Cl.: B60R 7/04

(54) **VORRICHTUNG ZUM AUFHÄNGEN VON GEGENSTÄNDEN**
DEVICE FOR SUSPENDING OBJECTS
DISPOSITIF DE SUSPENSION D'OBJETS

(30) Priorität: 05.11.2009 DE 102009052115; 15.03.2010 DE 102010011532; 22.09.2010 DE 102010048035
(43) Veröffentlichungstag der Anmeldung: 12.09.2012
(73) Patentinhaber: Kinetix AG, 8750 Glarus (CH)
(72) Erfinder: SKOTT, Jürgen, 72213 Altensteig (DE); ACKERET, Peter, CH - 8048 Zürich (CH)
(74) Vertreter: Dreiss
(86) Internationale Anmeldenummer: PCT/EP2010/006662
(87) Internationale Veröffentlichungsnummer: WO 2011/054489

(56) Entgegenhaltungen:
- EP-A1- 0 844 138
- EP-A1- 0 917 988
- DE-A1-102005 050 404
- DE-A1-102007 022 454
- GB-A- 2 448 958

## Beschreibung

Vorrichtung zum Aufhängen von Gegenständen Die Erfindung betrifft eine Vorrichtung zum Aufhängen von Gegenständen an einem Fahrzeugsitzteil, wie eine Rückenlehne, Kopfstütze oder eine Kopfstützenhalterung eines Fahrzeugsitzes.

Oft besteht das Bedürfnis, mitgeführte Gegenstände in Fahrzeugen so zu sichern, dass sie während der Fahrt nicht verrutschen, umkippen oder vom Sitz herunterfallen. Besonders ärgerlich ist dies bei Einkaufstaschen, in denen oft zahlreiche verschiedene stossempfindliche Nahrungsmittel transportiert werden. Aber auch in Handtaschen werden oft viele kleinere Gegenstände mitgeführt, die beim Umkippen im Fahrzeug umherfliegen können und dabei beschädigt werden oder unter den Sitzen verloren gehen. Oft werden auch Notebook-Computer in Taschen im Fahrzeug mitgeführt, die bei brüsken Fahrmanövern im Fahrzeug umher geschleudert werden und dabei Schaden nehmen oder Passagiere verletzen können.

Auf Reisen werden oft auch Kleider auf einzenlen oder mehreren Kleiderbügeln, oft auch in Kleidersäcken verpackt, auf den Beifahrer- oder die Rücksitze gelegt, die wegen des rutschigen Materials schon bei kleinen Beschleunigungen vom Sitz rutschen und auf den Boden fallen, so dass die Kleider schmutzig werden und zerknittern können. Deshalb werden Kleider auf Kleiderbügeln und in Kleidersäcken oft auch an den seitlich über den Türen angeordneten Haltegriffen aufgehängt, wo sie jedoch die Sicht des Fahrers in gefährlicher Weise beeinträchtigen und den Zugang zu den hinteren Sitzen behindern können.

Auf kürzeren Fahrten wird oft auch ein Jackett an einem in den Fahrzeugen üblichen, ebenfalls über der Türe angeordneten und oft mit dem Haltegriff kombinierten Kleiderhalter aufgehängt, was ebenfalls zu Sichtbehinderungen des Fahrers und Behinderungen beim Ein- und Aussteigen führen kann.

Eine Vorrichtung zum Aufhängen von Gegenständen an einem Fahrzeugsitzteil ist aus der WO 2009/112280 A2 vorbekannt.

Es ist die Aufgabe der Erfindung, eine andersartige Vorrichtung zum Aufhängen von Gegenständen zu schaffen, die an Fahrzeugsitzen anbringbar ist und an der Gegenstände wie Einkaufs- und Handtaschen, Jacketts und Kleider lose oder auf Kleiderbügeln und in Kleidersäcken auf einfache und schnelle Weise gegen Verrutschen, Umkippen oder vom Sitz herunterfallen gesichert werden können, ohne dabei die Sicht des Fahrers und das Ein- und Aussteigen in das bzw. aus dem Fahrzeug zu behindern.

Die Vorrichtung soll ferner so gestaltet sein, dass sie bei Nichtgebrauch möglichst wenig Platz einnimmt und kein Verletzungsrisiko für die Insassen des Fahrzeugs darstellt. Zudem soll die Vorrichtung schnell und einfach an Fahrzeugsitzen montiert und demontiert bzw. gegen anderen Vorrichtungen ausgetauscht werden können.

Erfindungsgemäß wird diese Aufgabe durch eine Vorrichtung zum Aufhängen von Gegenständen an einem Fahrzeugsitzteil, wie eine Rückenlehne, Kopfstütze oder Kopfstützenstangen eines Fahrzeugsitzes, mit den Merkmalen des unabhängen Anspruchs 1 gelöst.

Vorteilhafte Weiterbildungen der Erfindung sind in den abhängigen Ansprüchen definiert.

Die erfindungsgemäße Vorrichtung umfasst eine Befestigungseinrichtung zum Anschließen der Vorrichtung am Fahrzeugsitzteil mit einer Aufnahmebuchse und ein Steckelement, das mit der Aufnahmebuchse gekuppelt werden kann, sowie eine Verriegelungsmechanik zum Verriegeln des Steckelements in der Aufnahmebuchse und einem Trägerarm zum Aufhängen der Gegenstände, wobei die Verriegelungsmechanik und der Trägerarm am Steckelement angeordnet sind und wobei das Steckelement ein Gehäuse umfasst, das die Verriegelungsmechanik und den Trägerarm mindestens teilweise umschließt. Vorzugsweise ist die Befestigungseinrichtung so ausgebildet, dass die Vorrichtung von vorne und von hinten am Fahrzeugsitzteil befestigt werden kann. Dazu eignet sich insbesondere eine Befestigung im Raum zwischen der Oberseite der Rückenlehne und der Unterseite der Kopfstütze. An der gegen die Sitzbank gerichteten Vorderseite der Rückenlehne lassen sich so beispielsweise an freien Beifahrer- oder Rücksitzen Taschen oder Kleiderbügel am Trägerarm aufhängen.

Der Trägerarm kann fest oder beweglich mit dem Steckelement verbunden sein. Bei einer beweglichen Verbindung, beansprucht der Trägerarm bei Nichtgebrauch der Vorrichtung weniger Platz, doch ist die Konstruktion wesentlich aufwendiger, um eine hohe Tragfestigkeit zu erreichen.

In einer bevorzugten Bauweise ist der Trägerarm fest mit dem Steckelement verbunden und bildet zusammen mit diesem eine robuste Baugruppe, die bei Nichtgebrauch oder einer möglichen Beengung oder Gefährdung mitfahrender Passagiere durch Lösen der Verriegelung problemlos und schnell von der Befestigungseinrichtung abgenommen und bei Bedarf ebenso einfach und schnell wieder an die Befestigungseinrichtung angeschlossen werden kann.

Die Zuordnung der Verriegelungsmechanik zum Steckelement ermöglicht eine sehr robuste Verbindung zwischen Steckelement und Befestigungseinrichtung sowie eine optimale Zugänglichkeit zum raschen Lösen der Verriegelung.

Eine feste Verbindung zwischen Steckelement und Trägerarm ermöglicht eine wesentliche Vereinfachung der Konstruktion und eine Verbesserung der Stabilität gegenüber einer beweglichen Verbindung und hat den Vorteil, dass die Vorrichtung jederzeit einsatzbereit ist und einhändig bedient werden kann.

In einer bevorzugten Ausführungsform umfasst das Steckelement ein Gehäuse, welches die Verriegelungsmechanik und den Trägerarm mindestens teilweise umschließt, so dass keine Gefährdung der Passagiere besteht und die Vorrichtung auch ästhetisch befriedigt.

Der Trägerarm ist vorzugsweise aus Metall gefertigt und wird von zwei seitlich aufgesteckten Gehäuseschalen umschlossen, die mittig gefügt sind. Dies ergibt eine sehr stabile und bezüglich Sicherheit und Ästhetik optimale Bauweise. Zudem lässt sich so eine robuste und bequem handhabbare Verriegelungsmechanik am Steckelement unterbringen.

In einer bevorzugten Ausführungsform bilden das Steckelement, der Trägerarm und das Gehäuse gemeinsam einen in etwa quaderförmigen Körper, dessen Höhe in etwa der Höhe der Befestigungseinrichtung entspricht, so dass die Vorrichtung im Raum zwischen der Oberseite der Rückenlehne und der Unterseite der Kopfstütze untergebracht werden kann.

Weitere bevorzugte Ausgestaltungen der Erfindung ergeben sich aus den übrigen, in den Unteransprüchen genannten Merkmalen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegend Erfindung zu verlassen.

Die Erfindung wird nachfolgend in Ausführungsbeispielen anhand der zugehörigen Zeichnungen näher erläutert.
- Fig. 1: zeigt einen Längsschnitt von der Seite einer ersten Variante einer Befestigungseinrichtung, montiert an zwei Kopfstützenstangen.
- Fig. 2: zeigt einen Längsschnitt der Befestigungseinrichtung gemäss Fig. 1 von oben.
- Fig. 3: zeigt ein Steckelement zur Befestigungseinrichtung gemäss Fig. 1 und Fig. 2 in einem Längsschnitt von oben.
- Fig. 4: zeigt eine Perspektivansicht der Befestigungseinrichtung gemäss Fig. 1 und Fig. 2 mit dem Steckelement gemäss Fig. 3 in nicht montiertem Zustand.
- Fig. 5: zeigt eine Perspektivansicht einer Variante des Steckelements.
- Fig. 6: zeigt einen Längsschnitt durch das Steckelement gemäss Fig. 5 von oben.
- Fig. 7: zeigt eine Perspektivansicht einer zweiten Variante der Befestigungseinrichtung mit Steckelement gem. Fig. 5.
- Fig. 8: zeigt eine Perspektivansicht einer ersten Variante des Steckelements mit integriertem Trägerarm in der Gebrauchsstellung.
- Fig. 9: zeigt eine Seitenansicht des Steckelements gemäss Fig. 8 mit dem Trägerarm in der Gebrauchsstellung.
- Fig. 10: zeigt eine Perspektivansicht des Steckelements gemäss Fig. 8 und Fig. 9 mit dem Trägerarm in der Nichtgebrauchsstellung.
- Fig. 11: zeigt eine Seitenansicht des Steckelements gemäss Fig. 10 mit dem Trägerarm in der Nichtgebrauchsstellung.
- Fig. 12: zeigt einen Längsschnitt des Steckelements gemäss Fig. 8 und Fig. 9 mit dem Trägerarm in der Gebrauchsstellung.
- Fig. 13: zeigt einen Längsschnitt des Steckelements gemäss Fig. 10 und Fig. 11 mit dem Trägerarm in der Nichtgebrauchsstellung. Fig. 14 zeigt eine perspektivische Innenansicht des Steckelements gemäss Fig. 13.
- Fig. 15: zeigt eine Innenansicht von oben des Steckelements gemäss Fig. 13.
- Fig. 16: zeigt eine Explosionsdarstellung des Steckelements gemäss Fig. 8 bis Fig. 15.
- Fig. 17: zeigt eine Seitenansicht einer zweiten Variante des Steckelements mit integriertem Trägerarm, montiert mit der Befestigungseinrichtung gem. Fig. 7 an einem Fahrzeugsitz.
- Fig. 18: zeigt einen Längsschnitt durch das Steckelement mit integriertem Trägerarm sowie der Befestigungseinrichtung gemäss Fig. 17.
- Fig. 19: zeigt eine Perspektivansicht des Steckelements mit integriertem Trägerarm gemäss Fig. 17 und Fig. 18
- Fig. 20: zeigt eine teilweise freigeschnittene Perspektivansicht des Steckelements mit integriertem Trägerarm gemäss Fig. 19.
- Fig. 21: zeigt eine Explosionsdarstellung des Steckelements mit integriertem Trägerarm gem. Fig. 19 und Fig. 20.

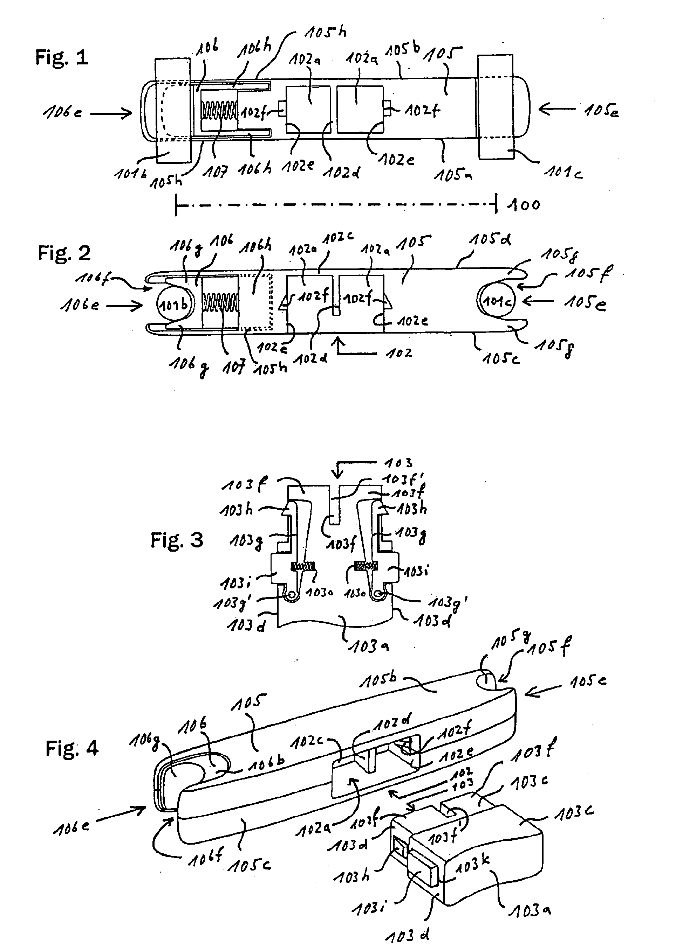

Fig. 1 bis 4 zeigen eine erste Variante der Befestigungseinrichtung 105, 106. Das erste Befestigungselement 105 umfasst ein längliches Gehäuse in Form eines rechtwinkligen Parallelepipeds mit einer Bodenwand 105a, einer Deckenwand 105b, einer vorderen Seitenwand 105c und einer hinteren Seitenwand 105d.

Im Gehäuse des ersten Befestigungselements 105 ist etwa mittig eine Aufnahmebuchse 102a angeordnet, die an der vorderen Seitenwand 105c eine Öffnung 102b aufweist, in die ein Führungsabschnitt 103f eines Steckelements 103a eingesteckt werden kann. Zur Stabilisierung der Aufnahmebuchse 102a ist an der Rückwand 102c mittig ein Führungssteg 102d angebracht, in den eine am Steckelement 103a vorgesehene Ausnehmung 103f' eingreift, wenn das Steckelement 103a in die Aufnahmebuchse 102a eingesteckt ist.

Am Steckelement 103a sind auf beiden Seiten des Führungsabschnitts 103f an den Gelenken 103g' gelagerte und mit Federn 103o gegeneinander vorgespannte Federarme 103g angebracht, an deren vorderen Enden Rasthaken 103h angeordnet sind, die in entsprechende Ausnehmungen 102f an den Seitenwänden102e der Aufnahmebuchse 102a eingreifen und das Steckelement 103a in der Aufnahmebuchse 102a verriegeln.

An den beiden Federarmen 103g sind zwischen den Rasthaken103h und den Gelenken 103g'nach aussen gerichtete Betätigungsorgane 103i angeordnet, die durch Tastenöffnungen 103k in den Seitenwänden 103d aus dem Steckelement 103a herausragen. Zum Lösen der Verriegelung werden die beiden Betätigungsorgane 103i gegeneinander gedrückt und das Führungsabschnitt 103f des Steckelement 103a aus der Aufnahmebuchse 102a herausgezogen.

Das zweite Befestigungselement 106 ist mit Linearführungen 105h, 106h im ersten Befestigungselement 105 geführt und parallel zu einer in etwa horizontal zwischen den Zentren der Kopfstützenstangen 101b, 101c verlaufenden Verbindungslinie 100 relativ zum ersten Befestigungselement 105 bewegbar. Mit der Spannfeder 107 wird das zweite Befestigungselement 106 in Richtung der Kopfstützenstange 101 b gedrückt.

An den äusseren Enden 105e, 106e des ersten Befestigungselements 105 und des zweiten Befestigungselements 106 sind gabelförmige Ausnehmungen 105f, 106 f angeordnet, in denen die Kopfstützenstangen 101b, 101c aufgenommen werden. Die Schenkel 105g, 106g der gabelförmigen Ausnehmungen 105f, 106f öffnen sich V-förmig in Richtung der Kopfstützenstangen 101 b, 101 c, so dass auch Kopfstützenstangen 101b, 101c unterschiedlicher Durchmesser in etwa tangential an den Schenkeln 105g, 106g anliegen.

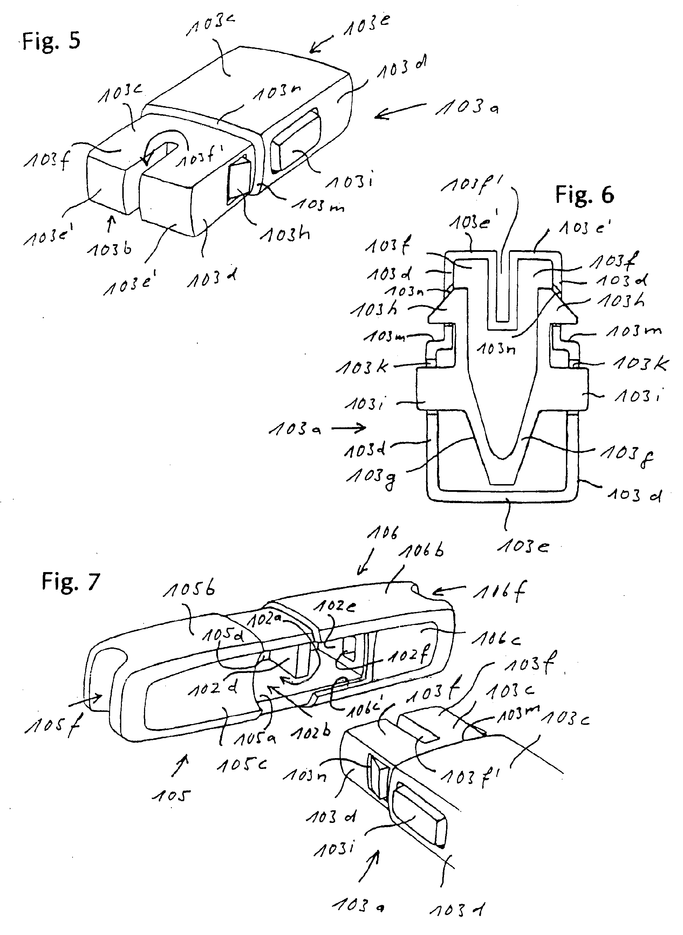

Fig. 5 bis 7 zeigen eine zweite Variante der Befestigungseinrichtung 105, 106 mit einer Variante des Steckelements 103a. Die Bodenwand 103b, die Deckenwand 103c, und die Seitenwände 103d, die das Gehäuse des Steckelements 103a bilden, sind bis über die beiden Rasthaken 103h hinaus nach vorne verlängert und mit der Stirnwand 103e' abgeschlossen, so dass das Steckelement 103a ein rundum geschlossenes Gehäuse aufweist.

An dem in der Aufnahmebuchse 102a aufgenommenen Führungsabschnitt 103f des Steckelements 103a sind die Bodenwand 103b, die Seitenwände 103d und die Deckenwand 103c etwas abgesetzt, so dass rundum ein Absatz 103m gebildet wird, der einen Anschlag zur Begrenzung der Einstecktiefe des Steckelements 103a in die Aufnahmebuchse 102a sowie einen Gegenanschlag für die Rasthaken 103h bildet. An den Seitenwänden 103d sind Durchbrüche 103n, durch die die Rasthaken 103h aus dem Gehäuse ragen, sowie Tastenöffnungen 103k für die Betätigungsorgane 103i vorgesehen.

In der Aufnahmebuchse 102a ist ein Führungssteg 102d angebracht, der die Bodenwand 105a, die hintere Seitenwand 105d und die Deckenwand 105b des ersten Befestigungselements 105 miteinander verbindet und die Stabilität der Aufnahmebuchse 102a erhöht und eine präzise und spielfreie Zentrierung des Führungsabschnitts 103f gewährleistet. Im Führungsabschnitt 103f des Steckelement 103a ist eine komplementäre Ausnehmung 103f' zur Aufnahme des Führungsstegs 102d vorgesehen.

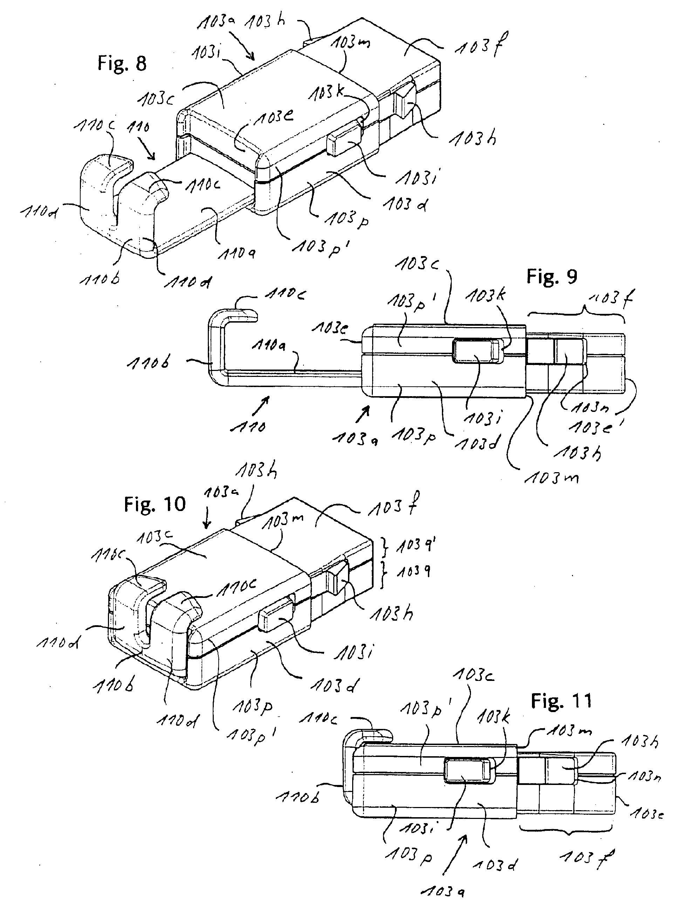

Fig. 8 bis 16 zeigen eine erste Variante des Steckelements 103a mit integriertem Trägerarm 110. Das Steckelement 103a umfasst ein Gehäuse-Unterteil 103p mit einer Bodenwand 103b, einem Zwischenboden 103b' und Teilen der beiden Seitenwände 103d, sowie der hinteren Stirnwand 103e und der vorderen Stirnwand 103e' und einen Deckel 103p' mit der Deckenwand 103c und Teilen der beiden Seitenwände 103d sowie der hinteren Stirnwand 103e und der vorderen Stirnwand 103e. Das Gehäuse-Unterteil 103p ist zur besseren Zugänglichkeit bei der Montage zweiteilig, mit separater Bodenwand 103b, ausgebildet.

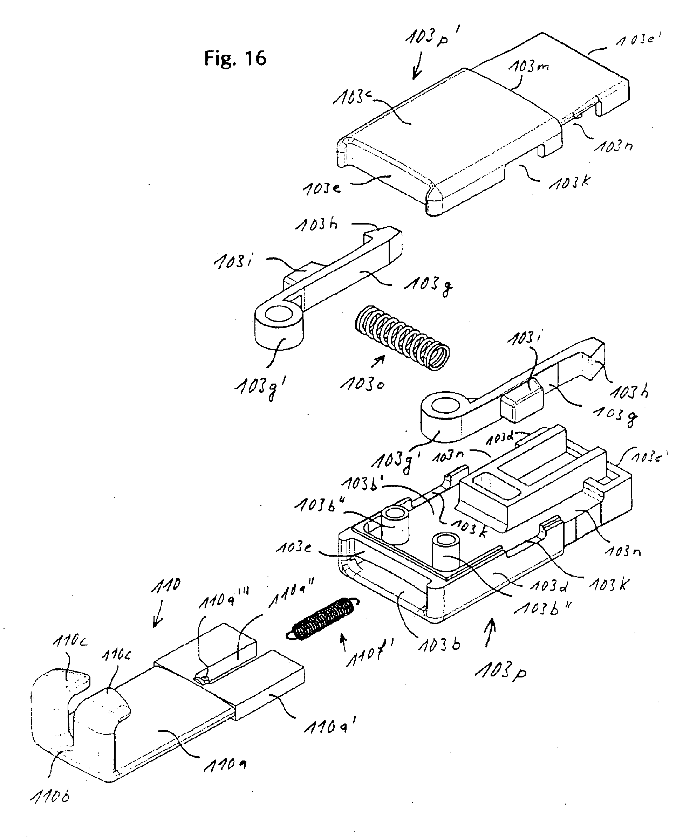

Der Zwischenboden 103b' unterteilt das Steckelement 103a in zwei übereinanderliegende Aufnahmeräume 103q, 103q' (Fig. 16). Im unteren Aufnahmeraum 103q sind der linear ausziehbare Trägerarm 110 mit dem Führungsabschnitt 110a' sowie die Zugfeder 110f' zum Einziehen des Trägerarms 110a in den Aufnahmeraum 103q aufgenommen, und im oberen Aufnahmeraum 103q' ist die Verriegelungsmechanik 103g, 103g', 103h, 103i, 103o, 103b" des Steckelement 103a untergebracht. Beide Aufnahmeräume 103q, 103q' erstrecken sich im Wesentlichen über die Gesamtläge des Steckelements 103a, inklusive dem Führungsabschnitt 103f, der in die Aufnahmebuchse 102a des ersten Befestigungselements 105 eingesteckt wird. Dadurch steht eine lange Führungs- und Auszugslänge für den Trägerarm 110 zur Verfügung, ohne dass die Länge des Steckelements 103a über die für die Verriegelungsmechanik 103g, 103g', 103h, 103i, 103o, 103b" notwendige Länge hinaus vergrössert werden muss.

Der Trägerarm 110 ist zwischen einer Nichtgebrauchsstellung, in der er im Wesentlichen im Aufnahmeraum 103q aufgenommen ist (Fig. 10, 11, 13) und einer Gebrauchsstellung (Fig. 8, 9, 12), in der er zum Aufhängen von Gegenständen, wie bspw. Taschen, Mappen und Kleiderbügeln, über die Rückenlehne 101d des Fahrzeugsitzes 101 hinausragt, beweglich ist.

Der Trägerarm 110 umfasst eine Bodenwand 110a mit einem Führungsabschnitt 110a' am hinteren Ende der Bodenwand 110a sowie eine am vorderen Ende der Bodenwand 110a angeordnete, in etwa vertikal verlaufende Abschlusswand 110b, an deren oberem Ende ein in etwa parallel zur Bodenwand 110a verlaufender, gegen das Steckelement 103a gerichteter Niederhalter 110c angeordnet ist. Die Abschusswand 110b und der Niederhalter 110c sind in der Mitte geschlitzt, so dass die beiden Abschnitte 110d sowohl in der Gebrauchsstellung als auch in der Nichtgebrauchsstellung des Trägerarms 110 als Kleiderhaken benutzt werden können.

Die Bodenwand 110a des Trägerarms 110 ist mit dem Führungsabschnitt 110a', der auch den Endanschlag zur Begrenzung des Auszugswegs bildet, linear beweglich an der Bodenwand 103b des Steckelements 103a geführt, wobei die Bewegungsrichtung parallel zur Einsteckrichtung des Steckelements 103a in die Aufnahmebuchse 102a erfolgt.

In der Mitte des Führungsabschnitts 110a ist ein Federausschnitt 110a" mit einer ersten Federaufhängung 110a"' vorgesehen, an der ein Ende der Zugfeder 110f' festgemacht ist, deren anderes Ende an einer am Zwischenboden 103b' angeordneten zweiten Federaufhängung 103b"' festgemacht ist. Die Zugfeder zieht den Trägerarm 110 bei Nichtgebrauch in den Aufnahmeraum 103q zurück.

Die im oberen Aufnahmeraum 103q' untergebrachte Verriegelungsmechanik 103g, 103g', 103h, 103i, 103o, 103b" des Steckelement 103a umfasst die beiden Federarme 103g an deren hinteren Enden Lageraugen 103g' angeordnet sind, mit denen die Federarme 103g auf Lagerzapfen 103b", die am Zwischenboden 103b' angeordnet sind, drehbar gelagert werden.

An den vorderen Enden der Federarme 103g sind die Rasthaken 103h angeordnet, die durch Durchbrüche 103n in den Seitenwänden 103d nach aussen ragen. Etwa mittig zwischen den Rasthaken 103h und den Lageraugen 103g' sind an den Federarmen 103g Betätigungsorgane 103i angeordnet, welche durch Tastenöffnungen 103k in den Seitenwänden 103d nach aussen ragen.

Zwischen den beiden Federarmen103g ist die Verriegelungsfeder 103o eingespannt, welche die Federarme 103g gegen die Seitenwände 103d drückt, welche die Anschläge bilden. Durch Zusammendrücken der beiden Betätigungsorgane 103i werden die Rasthaken 103h nach innen bewegt und die Verriegelung gelöst.

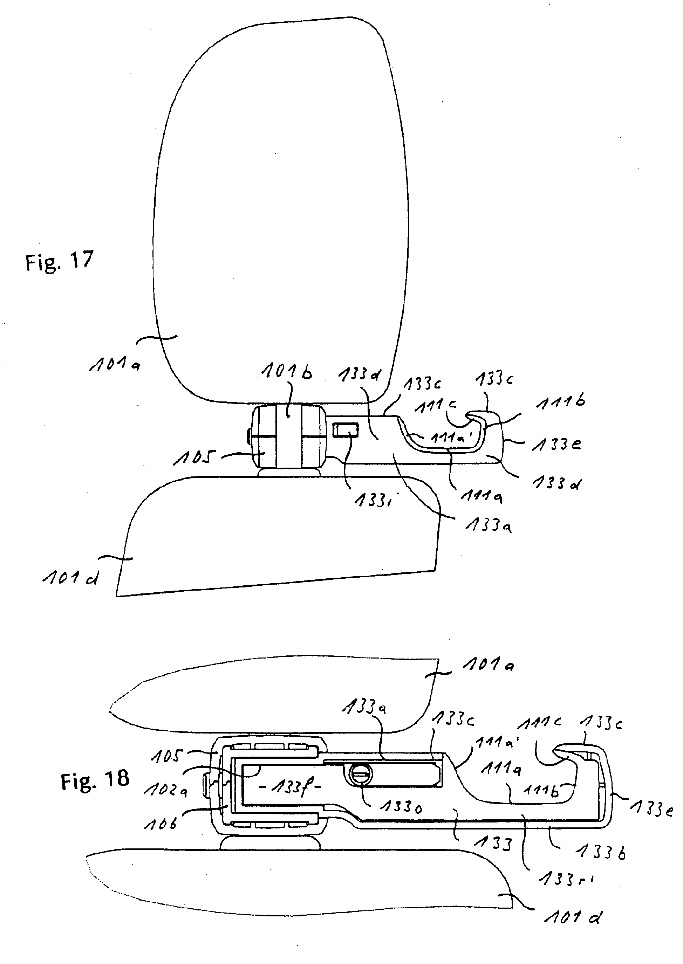

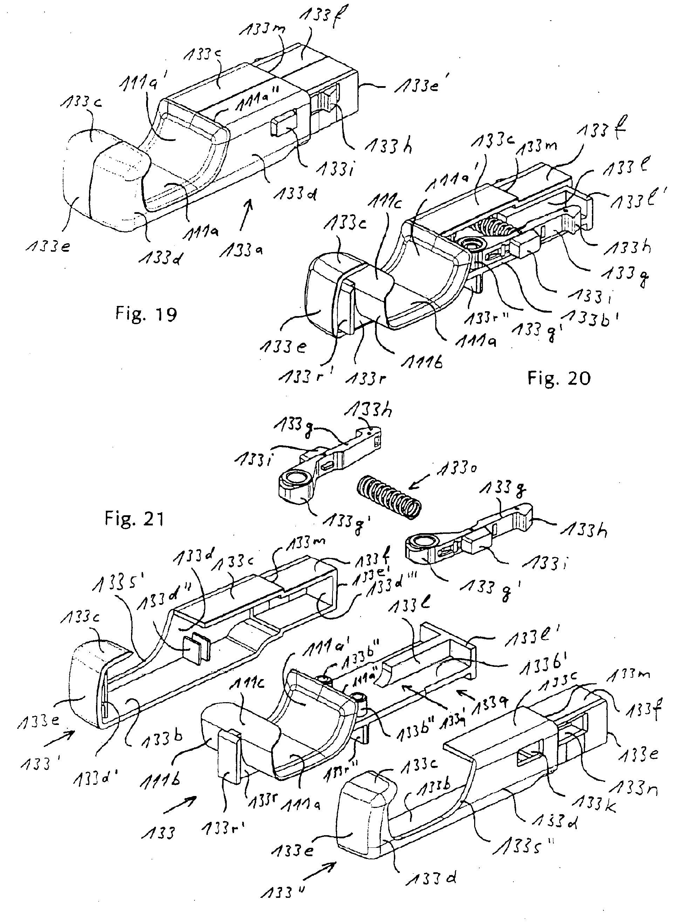

Fig. 17 bis 21 zeigen eine zweite Variante des Steckelements 133a mit integriertem Trägerarm 133. Die Vorrichtung ist im Raum zwischen der Rückenlehne 101d und der Kopfstütze 101a angeordnet und mit der Befestigungseinrichtung 105, 106 (Fig. 7) an den Kopfstützenstangen 101 b, 101 befestigt.

Das Steckelement 133a ist mit dem am vorderen Ende angeordneten Führungsabschnitt 133f in die Aufnahmebuchse 102a der Befestigungseinrichtung 105, 106 eingesteckt und mit den beiden Rasthaken 133h, welche in die an den Seitenwänden 102e der Aufnahmebuchse 102a angeordneten Ausnehmungen 102f eingreifen, in der Aufnahmebuchse 102a verriegelt (Fig. 2).

Der Absatz 133m am hinteren Ende des Führungsabschnitts 133f bildet einen Anschlag zur Begrenzung der Einstecktiefe des Steckelements 133a und stützt das Steckelement 133a an der vorderen Seitenwand 105c des ersten Befestigungselements 105 ab.

Der Trägerarm 133 umfasst den Zwischenboden 133b', der das Steckelement 133a in einen unteren Aufnahmeraum 133q, in dem eine in Längsrichtung verlaufende untere Trägerrippe 133e untergebracht ist und einen oberen Aufnahmeraum 133q', in dem die Verriegelungsmechanik 133g, 133h, 133i, 133o, 133g', 133b" sowie eine in Längsrichtung verlaufende obere Trägerrippe 1331 untergebracht sind, unterteilt. Die auf der Oberseite des Zwischenbodens 133b' angeordneten Lagerzapfen 133b" bilden die Drehlager für die Lageraugen 133g' der Federarme 133g.

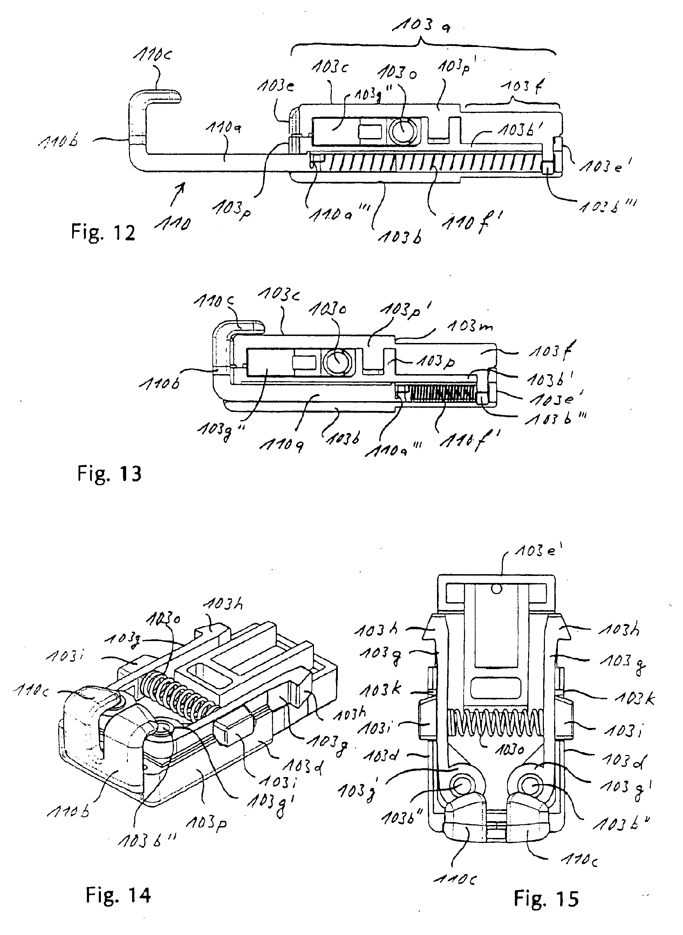

Der Aufbau der Verriegelungsmechanik 133g, 133h, 133i, 133o, 133g', 133b" entspricht der Bauweise gemäss Fig. 14 bis 16.

Am hinteren Ende des Zwischenbodens 133b' ist die etwas tiefer liegende Bodenwand 111 a des Trägerarms 133 angeordnet, mit einer gegen das Steckelement geneigten Rückwand 111a', die eine Einlaufschräge zum Einhängen von Gegenständen bildet und einer in etwa senkrecht zur Bodenwand 111 a ausgerichteten Abschlusswand 111b, an deren oberem Ende ein gegen die Rückwand 111a' gerichteter Niederhalter 111c angeordnet ist, der in etwa mit der oberen Abschlusskante 111 a" der Rückwand 111 a' fluchtet.

Die untere Trägerrippe 133r erstreckt sich mittig über die gesamte Länge des Trägerarms 133 und ist mit der Unterseite des Zwischenbodens 133b', der Rückwand 111a', der Bodenwand 111 a und der Abschlusswand 111 b verbunden. Die obere Trägerrippe 1331 ist mittig auf der Oberseite des Zwischenbodens 133b' angeordnet und erstreckt sich vom vorderen Ende des Zwischenbodens 133b' bis zur Verriegelungsfeder 133o.

Am hinteren Ende des Zwischenbodens 133b' ist eine Stirnwand 133I' angeordnet, die mit der unteren Trägerrippe 133r und der oberen Trägerrippe 1331 verbunden ist.

An der unteren Trägerrippe 133r ist am vorderen Ende eine erste Zentrierrippe 133r' und hinter der Rückwand 111a' eine zweite Zentrierrippe 133r" angeordnet, die mit dem Zwischenboden 133b' verbunden ist.

Die beiden Gehäuseschalen 133', 133" werden seitlich auf den Trägerarm 133 aufgesteckt und mittig gefügt. Die Zentrierrippen 133r', 133r" greifen dabei in die an den Gehäuseschalen 133', 133" angeordneten Positionierungsrippen 133d', 133d", wodurch sich der Trägerarm 133 und die beiden Gehäuseschalen 133', 133" gegeneinander ausrichten und fixieren.

An den Seitenwänden 133d der beiden Gehäuseschalen 133', 133" sind Ausschnitte 133s', 133s" angeordnet, welche kongruent zu den Aussenkonturen der Rückwand 111a', der Bodenwand 111 a, der Abschlusswand 111 b, und dem Niederhalter 111 c des Trägerarms 133 verlaufen und diese aufnehmen, wobei die Aussenkanten der Rückwand 111 a', der Bodenwand 111 a, der Abschlusswand 111 b, und des Niederhalters 111 c mit den Aussenseiten der Seitenwände 133d und der Deckenwand 133c der Gehäuseschalen 133', 133" fluchten.

Das Steckelement 133a, der Trägerarm 133 und die Gehäuseschalen 133', 133" bilden gemeinsam einen quaderförmigen Körper dessen Höhe in etwa der Höhe der Befesigungseinrichtung 105, 106 entspricht (Fig. 17 und 18).

## Patentansprüche

1. Vorrichtung zum Aufhängen von Gegenständen an einem Fahrzeugsitzteil, wie eine Rückenlehne (101d), Kopfstütze (101a) oder Kopfstützenstangen (101 b, 101c) eines Fahrzeugsitzes (101), umfassend
- eine Befestigungseinrichtung (105, 106) zum Anschliessen der Vorrichtung am Fahrzeugsitzteil (101a, 101 b, 101c, 101d), mit einer Aufnahmebuchse (102a, 102f),
- ein Steckelement (1 03a, 133a), das mit der Aufnahmebuchse (102a, 102f) gekuppelt werden kann,
- eine Verriegelungsmechanik (103g, 103g', 103h, 103i, 103o, 103b", 133g, 133h, 133i, 133o, 133g', 133b") zum Verriegeln des Steckelements (103a, 133a) in der Aufnahmebuchse (102a, 102f), und
- ein Trägerarm (110, 133) zum Aufhängen der Gegenstände, wobei der Trägerarm (110, 133) am Steckelement (1 03a, 133a) angeordnet ist, **dadurch gekennzeichnet, dass** am Steckelement (1 03a, 133a) ein Führungsabschnitt (1 03f, 133f) angeordnet ist, der von der Aufnahmebuchse (102a) aufgenommen wird und das Steckelement (103a, 133a) ein Gehäuse (103b, 133b, 103d, 133d, 103e, 133e, 103e', 133e', 103c, 133c, 103f, 133f) umfasst, welches die Verriegelungsmechanik (103g, 103g', 103h, 103i, 103o, 103b", 133g, 133h, 133i, 133o, 133g', 133b") mindestens teilweise umschliesst, wobei die Verriegelungsmechanik Federarme (103g, 133g) umfasst, an deren vorderen Enden sich nach aussen gerichtete Rasthaken (103h, 133h) befinden, die an zwei Seiten des Führungsabschnitts (103f, 133f) außerhalb des Gehäuses (103b, 133b, 103d, 133d, 103e, 133e, 103e', 133e', 103c, 133c, 103f, 133f) so angeordnet sind, dass sie in entsprechende Ausnehmungen (102f) an Seitenwänden (102e) der Aufnahmebuchse (1 02a) einhaken können.

2. Vorrichtung nach Anspruch 1, wobei der Führungsabschnitt (1 03f, 133f) einen Absatz (103m, 133m) aufweist, der sich seitlich der Öffnung (102b) der Aufnahmebuchse (1 02a) abstützt.

3. Vorrichtung nach Anspruch 1 oder 2, wobei an den beiden Federarmen (103g, 133g) nach aussen gerichtete Betätigungsorgane (103i, 133i) angeordnet sind, welche durch Tastenöffnungen (103k, 133k) an den beiden Seitenwänden (1 03d, 133d) des Steckelements (1 03a, 133a) ragen und mit denen die Federarme (1 03g, 133g) zum Lösen der Rasthaken (103h, 133h) gegeneinander gedrückt werden können.

4. Vorrichtung nach Anspruch 1, 2 oder 3, wobei die Federarme (1 03g, 133g) an ihren hinteren Enden über Gelenke (103b", 133b", 103g', 133g') mit dem Steckelement (1 03a, 133a) verbunden sind und durch eine Verriegelungsfeder (103o, 133o) auseinandergedrückt werden.

5. Vorrichtung nach einem der Ansprüche 1 bis 4, wobei der Trägerarm (110, 133) eine Bodenwand (110a, 111 a) sowie eine am vorderen Ende der Bodenwand (110a, 111 a) angeordnete, in etwa vertikal verlaufende Abschlusswand (110b, 111 b) aufweist, an deren oberem Ende ein in etwa parallel zur Bodenwand (110a, 11 b) verlaufender, in Richtung auf das Steckelement (1 03a, 133a) weisender Niederhalter (110c, 111 c) angeordnet ist.

6. Vorrichtung nach Anspruch 5, wobei die Bodenwand (110a, 111a) eine schräg gegen das Steckelement geneigte Rückwand (111a') aufweist, die eine Einlaufschräge zum Einhängen der Gegenstände bildet.

7. Vorrichtung nach einem der Ansprüche 5 oder 6, wobei der Niederhalter (111 c) in etwa mit der oberen Abschlusskante (111a") der Rückwand (111 a') fluchtet.

8. Vorrichtung nach einem der Ansprüche 1 bis 7, wobei das Steckelement (103a, 133a) durch einen Zwischenboden (103b', 133b') in zwei übereinanderliegende Aufnahmeräume (1 03q, 103q') unterteilt wird, die sich im Wesentlichen über die gesamte Länge des Steckelements (103a, 133a) erstrecken.

9. Vorrichtung nach Anspruch 8, wobei der Zwischenboden (103b', 133b') als Teil des Trägerarms (110, 133) ausgebildet und/oder fest mit dem Trägerarm (110, 133) verbunden ist.

10. Vorrichtung nach Anspruch 8 oder 9, wobei in dem unteren Aufnahmeraum (103q, 133q) mindestens eine in Längsrichtung verlaufende untere Trägerrippe (133r) des Trägerarms (110, 133) und in dem oberen Aufnahmeraum (103q\ 133q') die Verriegelungsmechanik (103g, 103g', 103h, 103i, 103o, 103b", 133g, 133h, 133i, 133o, 133g', 133b") des Steckelements (1 03a, 133a) und mittig eine in Längsrichtung verlaufende obere Trägerrippe (331) am Trägerarm (110, 133) aufgenommen sind.

11. Vorrichtung nach einem der Ansprüche 8 bis 10, wobei Lagerzapfen (103b", 133b") zur Lagerung der Federarme (103g, 133g) an dem Zwischenboden (103b', 133b') angeordnet sind.

12. Vorrichtung nach einem der Ansprüche 1 bis 11, wobei der Trägerarm (110, 133) aus Metall hergestellt und wobei das Gehäuse (103b, 133b, 103d, 133d, 103e, 133e, 103e', 133e', 103c, 133c, 103f, 133f) zumindest aus zwei Gehäuseschalen (103 p, 103p', 133', 133") zusammengesetzt ist, die seitlich auf den Trägerarm (110, 133) aufgesteckt und mittig gefügt werden.

13. Vorrichtung nach Anspruch 12, wobei am Trägerarm (110, 133) Zentrierrippen (133r\ 133r") angeordnet sind, die mit an den Gehäuseschalen (103p, 103p', 133', 133") angeordneten Positionierungsrippen (133d\ 133d") korrespondieren und die Gehäuseschalen (103 p, 103p', 133', 133") und den Trägerarm (110, 133) gegeneinander ausrichten und fixieren.

14. Vorrichtung nach Anspruch 12 oder 13, wobei an Seitenwänden (133d) der beiden Gehäuseschalen (103p, 103p', 133', 133") Ausschnitte (133s', 133s") vorgesehen sind, welche kongruent zu Aussenkonturen einer Rückwand (111a'), einer Bodenwand (111 a), einer Abschlusswand (111 b) und eines Niederhalters (111 c) des Trägerarms (133) ausgebildet sind und diese aufnehmen, wobei die Aussenkanten der Rückwand (111a'), der Bodenwand (111a), der Abschlusswand (111 b), und des Niederhalters (111c) in etwa mit den Aussenseiten der Seitenwände (133d) und einer Deckenwand (133c) der jeweiligen Gehäuseschale (103p, 103p', 133', 133") fluchten.

15. Vorrichtung nach einem der Ansprüche 1 bis 14, wobei das Steckelement (103a, 133a), der Trägerarm (110, 133) und das Gehäuse (103b, 133b, 103d, 133d, 103e, 133e, 103e', 133e\ 103c, 133c, 103f, 133f) gemeinsam einen in etwa quaderförmigen Körper bilden, dessen Höhe in etwa der Höhe der Befestigungseinrichtung (105, 106) entspricht.

16. Vorrichtung nach einem der Ansprüche 1 bis 15, wobei mindestens zwei der Bauteile Steckelement (103a, 133a), Trägerarm (110, 133), Verriegelungsmechanik (103g, 103g', 103h, 103i, 103o, 103b", 133g, 133h, 133i, 133o, 133g', 133b") und Gehäuse (103b, 133b, 103d, 133d, 103e, 133e, 103e', 133e', 103c, 133c, 103f, 133f) gemeinsam ein einteiliges Bauteil bilden.

## Claims

1. Device for suspending objects on a vehicle seat part such as a backrest (101d), headrest (101a) or headrest bars (101b, 101c) of a vehicle seat (101), comprising:
- a fixing device (105, 106) for connecting the device to the vehicle seat part (101a, 101b, 101c, 101d) with a receiver socket (102a, 102f),
- a plug element (103a, 133a) which can be coupled with the receiver socket (102a, 102f),
- a locking mechanism (103g, 103g', 103h, 103i, 103o, 103b", 133g, 133h, 133i, 133o, 133g', 133b") for locking the plug element (103a, 133a) in the receiver socket (102a, 102f), and
- a carrier arm (110, 133) for suspending the objects,
wherein the carrier arm (110, 133) is arranged on the plug element (103a, 133a),
**characterized in that** a guide portion (103f, 133f) is arranged on the plug element (103a, 133a) and is held by the receiver socket (102a), and the plug element (103a, 133a) comprises a housing (103b, 133b, 103d, 133d, 103e, 133e, 103e', 133e', 103c, 133c, 103f, 133f) which at least partly surrounds the locking mechanism (103g, 103g', 103h, 103i, 103o, 103b", 133g, 133h, 133i, 133o, 133g', 133b"), wherein the locking mechanism comprises spring arms (103g, 133g), on the front end of which are outwardly directed catch hooks (103h, 133h) which are arranged on two sides of the guide portion (103f, 133f) outside the housing (103b, 133b, 103d, 133d, 103e, 133e, 103e', 133e', 103c, 133c, 103f, 133f) such that they can hook into corresponding recesses (102f) on side walls (102e) of the receiving socket (102a).

2. Device according to claim 1, wherein the guide portion (103f, 133f) has a shoulder (103m, 133m) which rests on the side of the opening (102b) of the receiving socket (102a).

3. Device according to claim 1 or 2, wherein outwardly directed actuator elements (103i, 133i) are arranged on both spring arms (103g, 133g) and protrude through button openings (103k, 133k) on the two side walls (103d, 133d) of the plug element (103a, 133a) and with which the spring arms (103g, 133g) can be pressed together to release the catch hooks (103h, 133h).

4. Device according to claim 1, 2 or 3, wherein the spring arms (103g, 133g) are connected at their rear ends to the plug element (103a, 133a) via hinges (103b", 133b", 103g', 133g') and are pressed apart by a locking spring (103o, 133o).

5. Device according to any of claims 1 to 4, wherein the carrier arm (110, 133) has a bottom wall (110a, 111a) and an approximately vertical terminating wall (110b, 11b) which is arranged at the front end of the bottom wall (110a, 111a) and at its upper end has a retainer (110c, 111c) running approximately parallel to the bottom wall (110a, 111a) and pointing in the direction of the plug element (103a, 133a).

6. Device according to claim 5, wherein the bottom wall (110a, 111a) has a rear wall (111a') sloping obliquely towards the plug element and forming an inlet chamfer for suspending the objects.

7. Device according to any of claims 5 or 6, wherein the retainer (111c) is approximately aligned with the upper terminating edge (111a") of the rear wall (111a').

8. Device according to any of claims 1 to 7, wherein the plug element (103a, 133a) is divided by an intermediate floor (103b', 133b') into two receiving chambers (103q, 103q') lying above each other and substantially extending over the entire length of the plug element (103a, 133a).

9. Device according to claim 8, wherein the intermediate floor (103b', 133b') is formed as part of the carrier arm (110, 133) and/or is fixedly connected to the carrier arm (110, 133).

10. Device according to claim 8 or 9, wherein the lower receiving chamber (103q, 133q) holds at least one lower carrier rib (133r) of the carrier arm (110, 133) running in the longitudinal direction, and the upper receiving chamber (103q', 133q') holds the locking mechanism (103g, 103g', 103h, 103i, 103o, 103b", 133g, 133h, 133i, 133o, 133g', 133b") of the plug element (103a, 133a) and centrally an upper carrier rib (331) of the carrier arm (110, 133) running in the longitudinal direction.

11. Device according to any of claims 8 to 10, wherein bearing journals (103b", 133b") for mounting the spring arms (103g, 133g) are arranged on the intermediate floor (103b', 133b').

12. Device according to any of claims 1 to 11, wherein the carrier arm (110, 133) is made of metal and wherein the housing (103b, 133b, 103d, 133d, 103e, 133e, 103e', 133e', 103c, 133c, 103f, 133f) is composed of at least two housing shells (103p, 103p', 133', 133") which are pushed laterally onto the carrier arm (110, 133) and joined centrally.

13. Device according to claim 12, wherein centring ribs (133r', 133r") are arranged on the carrier arm (110, 133) which correspond to the positioning ribs (113d', 133d") arranged on the housing shells (103p, 103p', 133', 133") and which align and fix the housing shells (103p, 103p', 133', 133") and the carrier arm (110, 133) in relation to each other.

14. Device according to claim 12 or 13, wherein cutouts (133s', 133s") are provided on side walls (133d) of both housing shells (103p, 103p', 133', 133") and are formed congruent to outer contours of a rear wall (111a'), a bottom wall (111a), a terminating wall (111b) and a retainer (111c) of the carrier arm (133) and receive these, wherein the outer edges of the rear wall (111a'), the bottom wall (111a), the terminating wall (111b) and the retainer (111c) align approximately with the outsides of the side walls (133d) and a top wall (133c) of the respective housing shell (103p, 103p', 133', 133").

15. Device according to any of claims 1 to 14, wherein the plug element (103a, 133a), the carrier arm (110, 133) and the housing (103b, 133b, 103d, 133d, 103e, 133e, 103e', 133e', 103c, 133c, 103f, 133f) together form an approximately cuboid body, the height of which corresponds approximately to the height of the fixing device (105, 106).

16. Device according to any of claims 1 to 15, wherein at least two of the components plug element (103a, 133a), carrier arm (110, 133), locking mechanism (103g, 103g', 103h, 103i, 103o, 103b", 133g, 133h, 133i, 133o, 133g', 133b"), and housing (103b, 133b, 103d, 133d, 103e, 133e, 103e', 133e', 103c, 133c, 103f, 133f) together form a one-piece component.

## Revendications

1. Dispositif pour accrocher des objets au niveau d'une partie de siège de véhicule, comme un dossier (101d), un appui-tête (101a) ou des barres d'appui-tête (101b, 101c) d'un siège de véhicule (101), comprenant
- un dispositif de fixation (105, 106) pour raccorder le dispositif à la partie de siège de véhicule (101a, 101b, 101c, 101d), avec une douille de réception (102a, 102f),
- un élément enfichable (103a, 133a), qui peut être couplé à la douille de réception (102a, 102f),
- un mécanisme de verrouillage (103g, 103g', 103h, 103i, 103o, 103b", 133g, 133h, 133i, 133o, 133g', 133b") pour verrouiller l'élément enfichable (103a, 133a) dans la douille de réception (102a, 102f), et
- un bras porteur (110, 133) pour accrocher les objets, le bras porteur (110, 133) étant agencé au niveau de l'élément enfichable (103a, 133a),
**caractérisé en ce qu'**une section de guidage (103f, 133f), qu'accueille la douille de réception (102a), est agencée au niveau de l'élément enfichable (103a, 133a) et l'élément enfichable (103a, 133a) comprend un boîtier (103b, 133b, 103d, 133d, 103e, 133e, 103e', 133e', 103c, 133c, 103f, 133f), qui renferme au moins partiellement le mécanisme de verrouillage (103g, 103g', 103h, 103i, 103o, 103b", 133g, 133h, 133i, 133o, 133g', 133b"), le mécanisme de verrouillage comprenant des bras élastiques (103g, 133g), aux extrémités antérieures desquels se trouvent des crochets d'encliquetage (103h, 133h), orientés vers l'extérieur, qui sont agencés à l'extérieur du boîtier (103b, 133b, 103d, 133d, 103e, 133e, 103e', 133e', 103c, 133c, 103f, 133f) sur les deux côtés de la section de guidage (103f, 133f) de sorte que lesdits crochets peuvent s'encliqueter dans des évidements (102f) correspondants au niveau des parois latérales (102e) de la douille de réception (102a).

2. Dispositif selon la revendication 1, dans lequel la section de guidage (103f, 133f) présente un redent (103m, 133m), qui appuie latéralement contre l'ouverture (102b) de la douille de réception (102a).

3. Dispositif selon la revendication 1 ou 2, dans lequel, au niveau des deux bras élastiques (103g, 133g), sont agencés des organes d'actionnement (103i, 133i) orientés vers l'extérieur, qui font saillie à travers des ouvertures pour touches (103k, 133k) au niveau des deux parois latérales (103d, 133d) de l'élément enfichable (103a, 133a) et avec lesquels les bras élastiques (103g, 133g) peuvent être pressés l'un vers l'autre pour libérer les crochets d'encliquetage (103h, 133h).

4. Dispositif selon l'une quelconque des revendications 1, 2 ou 3 dans lequel les bras élastiques (103g, 133g) sont reliés à l'élément enfichable (103a, 133a) au niveau de leurs extrémités postérieures par l'intermédiaire d'articulations (103b", 133b", 103g', 133g') et sont écartés l'un de l'autre par un ressort de verrouillage (103o, 133o).

5. Dispositif selon l'une quelconque des revendications 1 à 4, dans lequel le bras porteur (110, 133) présente une paroi de fond (110a, 111a) ainsi qu'une paroi terminale (110b, 111b) à peu près verticale, agencée au niveau de l'extrémité antérieure de la paroi de fond (110a, 111a), et au niveau de l'extrémité supérieure de laquelle est agencé un organe de retenue (110c, 111c) dirigé vers l'élément enfichable (103a, 133a) et à peu près parallèle à la paroi de fond (110a, 111a).

6. Dispositif selon la revendication 5, dans lequel la paroi de fond (110a, 111a) présente une paroi arrière (111a') inclinée obliquement contre l'élément enfichable et formant une rampe d'entrée pour accrocher les objets.

7. Dispositif selon la revendication 5 ou 6, dans lequel l'organe de retenue (111c) est à peu près aligné avec le bord terminal (111a") supérieur de la paroi arrière (111a').

8. Dispositif selon l'une quelconque des revendications 1 à 7, dans lequel l'élément enfichable (103a, 133a) est divisé en deux espaces de réception (103q, 133q') superposés grâce à un fond intermédiaire (103b', 133b'), lesdits espaces s'étendant essentiellement sur la totalité de la longueur de l'élément enfichable (103a, 133a).

9. Dispositif selon la revendication 8, dans lequel le fond intermédiaire (103b', 133b') constitue une partie du bras porteur (110, 133) et/ou est relié fixe au bras porteur (110, 133).

10. Dispositif selon la revendication 8 ou 9, dans lequel l'espace de réception (103q, 133q) inférieur accueille au moins une nervure de support (133r) inférieure du bras porteur (110, 133), orientée dans le sens longitudinal, et l'espace de réception (103q', 133q') supérieur accueille le mécanisme de verrouillage (103g, 103g', 103h, 103i, 103o, 103b", 133g, 133h, 133i, 133o, 133g', 133b") de l'élément enfichable (103a, 133a) et le centre du bras porteur (110, 133) accueille une nervure de support (331) supérieure, orientée dans le sens longitudinal.

11. Dispositif selon l'une quelconque des revendications 8 à 10, dans lequel des tourillons (103b", 133b") sont agencés pour retenir les bras porteurs (103g, 133g) au niveau du fond intermédiaire (103b', 133b').

12. Dispositif selon l'une quelconque des revendications 1 à 11, dans lequel le bras porteur (110, 133) est fabriqué en métal et dans lequel le boîtier (103b, 133b, 103d, 133d, 103e, 133e, 103e', 133e', 103c, 133c, 103f, 133f) est constitué d'au moins deux coques formant boîtier (103p, 103p', 133', 133") qui s'emboîtent latéralement sur le bras porteur (110, 133) et s'assemblent par le milieu.

13. Dispositif selon la revendication 12, dans lequel, au niveau du bras porteur (110, 133), sont agencées des nervures de centrage (133r', 133r") qui coïncident avec des nervures de positionnement (133d', 133d") agencées au niveau des coques formant boîtier (103p, 103p', 133', 133") et qui orientent et immobilisent les uns contre les autres les coques formant boîtier (103p, 103p', 133', 133") et le bras porteur (110, 133).

14. Dispositif selon la revendication 12 ou 13, dans lequel des sections (133s', 133s") sont prévues au niveau des parois latérales (133d) des deux coques formant boîtier (103p, 103p', 133', 133"), lesdites sections étant réalisées de manière congruente par rapport aux contours extérieurs d'une paroi arrière (111a'), d'une paroi de fond (111a), d'une paroi terminale (111b) et d'un organe de retenue (111c) du bras porteur (133) et les recevant, les bords extérieurs de la paroi arrière (111a'), de la paroi de fond (111a), de la paroi terminale (111b) et de l'organe de retenue (111c) étant approximativement alignés avec les côtés extérieurs des parois latérales (133d) et d'une paroi formant couvercle (133c) des coques formant boîtier (103p, 103p', 133', 133") respectives.

15. Dispositif selon l'une quelconque des revendications 1 à 14, dans lequel l'élément enfichable (103a, 133a), le bras porteur (110, 133) et le boîtier (103b, 133b, 103d, 133d, 103e, 133e, 103e', 133e', 103c, 133c, 103f, 133f) forment en commun un corps approximativement parallélépipédique, dont la hauteur correspond approximativement à la hauteur du dispositif de fixation (105, 106).

16. Dispositif selon l'une quelconque des revendications 1 à 15, dans lequel au moins deux des composants élément enfichable (103a, 133a), bras porteur (110, 133), mécanisme de verrouillage (103g, 103g', 103h, 103i, 103o, 103b", 133g, 133h, 133i, 133o, 133g', 133b") et boîtier (103b, 133b, 103d, 133d, 103e, 133e, 103e', 133e', 103c, 133c, 103f, 133f) forment en commun un composant monobloc.
